# EUROPÄISCHE PATENTSCHRIFT

(11) **EP 0 373 708 B1**
(45) Veröffentlichungstag und Bekanntmachung des Hinweises auf die Patenterteilung: **22.03.1995**
(21) Anmeldenummer: 89203131.1
(22) Anmeldetag: 11.12.1989
(51) Int. Cl.: H04N 5/44

(54) **Anordnung zum Uebertragen und Signalquelle zum Abgeben digitaler Bildsignale**
Arrangement for the transmission of digital image signals and signal source for the generation thereof
Arrangement pour la transmission des signaux numériques d'image et source de signal pour leur génération

(30) Priorität: 16.12.1988 DE 3842361
(43) Veröffentlichungstag der Anmeldung: 20.06.1990
(73) Patentinhaber: Philips Patentverwaltung GmbH, 22335 Hamburg (DE); Philips Electronics N.V., 5621 BA Eindhoven (NL)
(72) Erfinder: Hackmann, Hartmut, D-2000 Hamburg 20 (DE)
(74) Vertreter: Peters, Carl Heinrich, Dipl.-Ing.

(56) Entgegenhaltungen:
- GB-A- 2 193 608
- GB-A- 2 204 754
- US-A- 4 689 683

## Beschreibung

Die Erfindung bezieht sich auf eine Anordnung zum Übertragen digitaler Bildsignale aus einer Anzahl von Signalquellen auf wenigstens eine Signalsenke sowie eine Signalquelle zum Abgeben digitaler Bildsignale.

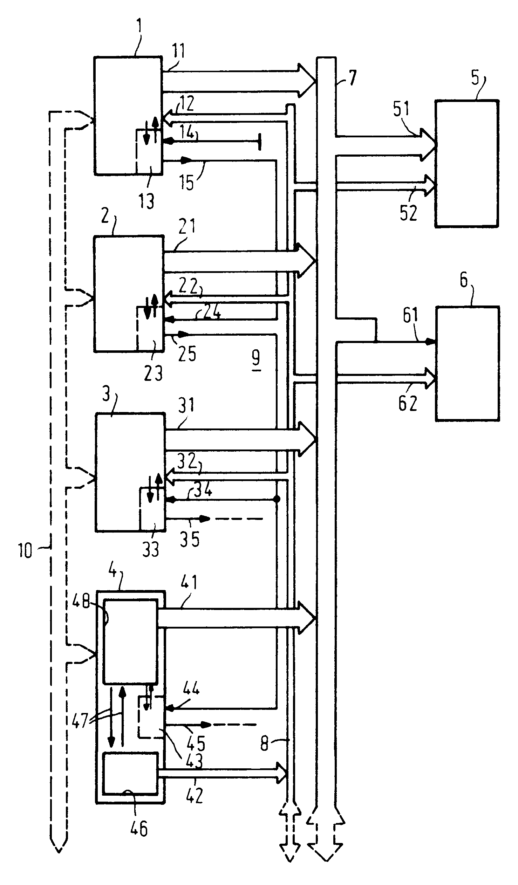

Aus der Druckschrift "Valvo Technische Information 881031", "Digitale Videosignalverarbeitung, 2. Teil" sind Schaltungen für die digitale Video-Signalverarbeitung mit Digitalisierung des analogen FBAS-Signals bekannt. Insbesondere ist aus dem Abschnitt 2.1., Seiten 5 und 6 sowie Bild 3 ein Signalquellenschalter bekannt, der zur Auswahl zwischen maximal drei FBAS-Eingangssignalen dient. Dabei kann in einem Fernsehempfänger zwischen einem internen, vom ZF-Demodulator kommenden und zwei extern zugeführten FBAS-Signalen gewählt werden. Aus dem Abschnitt 1, insbesondere Seite 4, linke Spalte, drittletzter Absatz, sowie Bild 2 läßt sich ferner der Hinweis entnehmen, daß sich in einen Übertragungsweg zwischen einem digitalen Multistandarddecoder und einem digitalen Videoprozessor digitale Signale wie z.B. "MAC" oder ISDN" einspeisen lassen.

Die zitierte Druckschrift enthält jedoch keinen Hinweis über eine zweckmäßige Ausgestaltung der Einspeisung digitaler Signale.

Die Erfindung hat die Aufgabe, eine Anordnung zu schaffen, die eine Zusammenschaltung mehrerer Signalquellen ermöglicht, die einfach aufgebaut und zu betreiben und universell für unterschiedliche Betriebsfälle bei zuverlässiger Funktion einsetzbar ist.

Diese Aufgabe wird erfindungsgemäß bei einer Anordnung der eingangs genannten Art gelöst durch eine Bildsignalleitungsgruppe zum Übertragen von als digitale Bilddaten kodierten Signalen von jeweils einer oder mehreren wählbaren der Signalquellen, eine Synchronleitungsgruppe zum Übertragen eines Bilddatentaktsignals und eines Zeilensynchronsignals von einer Taktsignalquelle sowie eine Zugriffssteuerung, mit zu jeder Signalquelle einer Zugriffssteuerschaltung, die an einem Ausgang ein Sperrsignal abgibt, wenn ihr an einem Eingang ein Sperrsignal zugeführt wird oder ein Signal der zugehörigen Signalquelle zum Übertragen ansteht und die bei Anlegen eines Sperrsignals an ihrem Eingang die zugehörige Signalquelle für die Abgabe digitaler Bilddaten in vorbestimmbarer, zeitlicher Korrelation zum Bilddatentaktsignal sperrt und nach Wegfall des Sperrsignals gleichermaßen freigibt, wobei alle Zugriffssteuerschaltungen bezüglich ihrer Ein- und Ausgänge in einer den Vorrang der Signalquellen für die Übertragung bestimmenden Kettenschaltung angeordnet sind.

Die erfindungsgemäße Anordnung schafft somit eine einem "Datenbus" ähnliche Leitungskonfiguration, bei der die Bildsignale darstellenden, digitalen Bilddaten auf einer gesonderten Leitungsgruppe, der Bildsignalleitungsgruppe, übertragen werden, die alle Ausgänge sämtlicher Signalquellen sowie alle Eingänge sämtlicher Signalsenken miteinander verbindet. Zu den Bilddaten gehören insbesondere ein digitales Leuchtdichtesignal sowie digitale Farbsignale. Die erfindungsgemäße Anordnung erlaubt eine Übertragung dieser Signale in beliebigem Datenformat.

Neben der Bildsignalleitungsgruppe weist die erfindungsgemäße Anordnung eine Synchronleitungsgruppe auf, auf der das Bilddatentaktsignal und ein wie dieses für die Funktion aller an die erfindungsgemäße Anordnung angeschlossenen Signalquellen bzw. -senken maßgebliches Zeilensynchronsignal übertragen werden. Während jedoch die Bilddaten von jeweils einer wählbaren der Signalquellen stammen können, werden das Bilddatentaktsignal und das Zeilensynchronsignal von einer festgelegten Taktsignalquelle verbindlich für alle Signalquellen und -senken eingespeist. Durch die Signale auf der Synchronleitungsgruppe wird aus allen durch die erfindungsgemäße Anordnung miteinander verbundenen Signalquellen und -senken auf einfache und funktionssichere Weise ein bildzeilenverkoppeltes Signalverarbeitungssystem gebildet.

Um sicherzustellen, daß auf der Bildsignalleitungsgruppe zu jedem Zeitpunkt eindeutige Bilddaten anliegen, ist erfindungsgemäß ferner eine Zugriffssteuerung vorgesehen, durch die gewährleistet ist, daß zu jedem Zeitpunkt nur jeweils eine der Signalquellen Bilddaten in die Bildsignalleitungsgruppe speist, während gleichzeitig die Zufuhr von Bilddaten aus den übrigen Signalquellen unterbrochen ist. Die Kettenschaltung von Zugriffssteuerschaltungen zu jeder der Signalquellen, aus der die Zugriffssteuerung aufgebaut ist, ermöglicht eine einfache, dezentrale Festlegung und Durchführung eines Vorranges, d.h. einer Hierarchie der einzelnen Signalquellen untereinander. Eine Signalquelle, die Bilddaten an die Bildsignalleitungsgruppe abgibt, sperrt über die Kettenschaltung automatisch alle nachrangigen Signalquellen. Zur Auslösung dieses Sperrvorgangs wird das Sperrsignal der ranghöchsten Signalquelle ausgehend von deren Zugriffssteuerschaltung durch die Zugriffssteuerschaltungen aller im Rang niedrigerer Signalquellen geschleift, und zwar in einem vorgegebenen, durch das Bilddatentaktsignal gesteuerten Zeitrhythmus. Von jeder der Signalquellen aus gesehen ist damit der Zeitpunkt, zu dem die einzelnen, nachrangigen Signalquellen gesperrt werden, genau vorbestimmbar; insbesondere können die Signalquellen und ihre Zugriffssteuerschaltungen eine zeitliche Programmierung dahingehend erhalten, daß das Sperrsignal einer der Signalquellen rechtzeitig vor einem vorgesehenen Umschaltzeitpunkt, zu dem die das Sperrsignal auslösende Signalquelle mit dem Aussenden ihrer Bilddaten beginnen wird, durch die Kettenschaltung durchgeschleift ist. Für jede Signalquelle bzw. jede zugehörige Zugriffssteuerschaltung kann ein Vorlaufzeitintervall in Form eines bestimmten Vielfachen der Periode des Bilddatentaktsignals festgelegt werden, das zwischen dem Abgeben des Sperrsignals oder seinem Empfang und dem Umschaltzeitpunkt verstreichen muß. Unabhängig vom jeweiligen Ursprung des Sperrsignals für den gerade beabsichtigten Umschaltvorgang und unabhängig von der Stellung der Signalquelle in der den Vorrang bestimmenden Kettenschaltung schaltet dann jede der Zugriffssteuerschaltungen ihre zugehörige Signalquelle präzise zum Umschaltzeitpunkt um.

Die präzise Steuerung des Vorrangs der Signalquellen ermöglicht über das Umschalten zwischen den Fernsehsignalen unterschiedlicher Programmquellen beispielsweise beim Übergang der Betrachtung von einem Fernsehprogramm zu einem anderen durch den Benutzer hinaus ein bildpunktgenaues Umschalten zwischen zwei oder mehreren Signalquellen innerhalb einer Zeile des Fernsehbildes, ohne daß an der Übergangsstelle von einem Fernsehsignal zum anderen im Bild Störungen auftreten. Dadurch kann über die Zugriffssteuerung neben der Senderwahl auch beispielsweise eine "Bild-in-Bild"-Betriebsart gesteuert werden, ohne daß dafür zusätzliche Vorrichtungen bzw. Schaltungen nötig sind. Es wird somit eine einfache, sichere und universelle Steuerung des Vorrangs in der Zusammenschaltung mehrerer Videosignalquellen erreicht.

Bevorzugt kann die erfindungsgemäße Anordnung mit einem weiteren Steuerungssystem, insbesondere einem System, wie es unter der Bezeichnung I²C-Bus bekannt ist, verbunden sein. Über diesen Bus wird dann vorzugsweise eine "statische" Steuerung der Signalquellen und -senken, d.h. eine mit dem Bilddatentaktsignal nicht korrelierte Steuerung, vorgenommen, während die Zugriffssteuerung gemäß der Erfindung die beschriebene "dynamische" Vorrangsteuerung ausübt. Es ist damit auch möglich, die Kettenschaltung der Zugriffssteuerschaltungen mit Verzweigungen zu versehen, so daß durch den I²C-Bus mehrere bezüglich der dynamischen Vorrangsteuerung gleichrangige Signalquellen auswählbar sind.

In einer Fortbildung der Erfindung sind über die Bildsignalleitungsgruppe weitere Synchron- und/oder Steuersignale, insbesondere ein Bildsynchronsignal, übertragbar. Das Bildsynchronsignal wird somit nicht von der Taktsignalquelle zentral vorgegeben, sondern zusammen mit dem Bildsignal von jeder der Signalquellen individuell zugeführt. Dadurch wird beispielsweise die Anpassung einer Bildwiedergabeanordnung an unterschiedliche Phasenlagen der Bildsynchronsignale unterschiedlicher Signalquellen und damit unterschiedlicher Programmquellen bzw. Sender vereinfacht. Außerdem ist es möglich, das Bildsynchronsignal von einer anderen Signalquelle zuzuführen als die Bilddaten.

Bei der erfindungsgemäßen Anordnung kann ferner entweder über die Synchronleitungsgruppe und dort insbesondere verknüpft mit dem Bilddatentaktsignal als auch über die Bildsignalleitungsgruppe als eines der weiteren Synchron- und/oder Steuersignale ein Signal übertragen werden, das eine Referenz für die Phase der Bilddaten darstellt, sofern diese nicht eindeutig vom Bilddatentaktsignal geliefert wird, beispielsweise dann, wenn die Frequenz des Bilddatentaktsignals ein Vielfaches der Folgefrequenz der Bilddaten ist.

Vorzugsweise sind zum Übertragen des Zeilen- und/oder des Bildsynchronsignals eingerichtete Leitungen zum zusätzlichen, zeitverschachtelten Übertragen weiterer Signale einsetzbar. Damit können diese Leitungen zusätzlich genutzt werden, da sie im Vergleich zu der Bildsignalleitungsgruppe nur eine niedrige Datenübertragungsfolge aufweisen. Vorzugsweise kann auf der Leitung für das Zeilensynchronsignal ein digital verschlüsseltes Signal für den Wert der Frequenz bzw. der Periodendauer des Bilddatentaktsignals übertragen werden. Auf der Leitung für das Bildsynchronsignal lassen sich insbesondere Informationen über die gerade anstehenden Bilddaten, beispielsweise über ein gerade übertragenes Halbbild, weiterleiten. Diese oder andere Signale lassen sich auf einfache Weise mit dem Zeilen- sowie dem Bildsynchronsignal zeitlich verschachteln.

In einer Weiterbildung ist die Taktsignalquelle von einer bestimmten der Signalquellen umfaßt. Das Bilddatentaktsignal und das Zeilensynchronsignal werden dann stets von dieser bestimmten Signalquelle geliefert, während die Bilddaten auch von den anderen Signalquellen stammen können. Das gesamte, durch die erfindungsgemäße Anordnung verbundene System von Signalquellen und -senken wird dann stets auf diese eine bestimmte Signalquelle synchronisiert; das Bilddatentaktsignal und das Zeilensynchronsignal werden in ihrer Phase und Frequenz an das von dieser bestimmten Signalquelle gelieferte Fernsehsignale angelehnt Bilden beispielsweise eine Fernsehrundfunk-Empfangsanordnung und ein Video-Aufzeichnungs- und -Wiedergabegerät je eine Signalquelle und eine Bildwiedergabeanordnung eine Signalsenke, können alle diese Komponenten vorteilhaft von einem aus dem von der Fernsehrundfunk-Empfangsanordnung empfangenen Fernsehsignal abgeleiteten Bilddatentaktsignal und Zeilensynchronsignal gesteuert werden.

Vorteilhaft sind die einem Leuchtdichtesignal zugeordneten Bilddaten parallel über eine erste Anzahl Leitungen und die einem oder mehreren Farbsignalen zugeordneten Bilddaten parallel oder im Zeitmultiplex über eine zweite Anzahl Leitungen der Bildsignalleitungsgruppe übertragbar. Obgleich grundsätzlich die Bildsignale in einem beliebigen Format übertragbar sind, bietet diese Lösung den Vorteil einer Verbindung einer hohen Datenrate bei einer technisch gut beherrschbaren Frequenz des Bilddatentaktsignals sowie eine Begrenzung der Anzahl der Leitungen bei gleichzeitig guter Auflösung der Farb- und Leuchtdichtewerte im übertragenen Bild. Dabei ist berücksichtigt, daß dem Leuchtdichtesignal die meisten Bilddaten zugeordnet sind, während die Farbsignale entsprechend weniger Bilddaten - in der Regel in Form einer niedrigeren Folgefrequenz einzelner Farbwerte, weniger jedoch in einer Verringerung der Auflösung dieser Farbwerte - aufweisen. Werden die Farbsignale im Zeitmultiplex übertragen, liegt ein kompletter Bilddatensatz - bestehend aus wenigstens je einem wert für das Leuchtdichtesignal und jedes Farbsignal - erst nach mehreren Perioden des Bilddatentaktsignals, insbesondere erst nach mehreren Perioden der Datenrate des Leuchtdichtesignals, vor.

Zusätzlich zur Steuerung und Synchronisation durch die beschriebenen Synchron- und/oder Steuersignale und -einrichtungen können Anfang und auch Ende einer Übertragung von Bilddaten von einer Signalquelle auf der Bildsignalleitungsgruppe durch bestimmte, eindeutig vorgegebene und erkennbare Datenworte markiert werden.

Erfindungsgemäß wird ferner eine Signalquelle zum Abgeben digitaler Bildsignale vorgesehen, die einen Bildsignalausgang zum Abgeben von als digitale Bilddaten kodierten Signalen, einen Synchronsignalein- bzw. -ausgang zum Empfangen bzw. Abgeben eines Bilddatentaktsignals und eines Zeilensynchronsignals sowie eine Zugriffssteuerschaltung, die an einem Ausgang ein Sperrsignal abgibt, wenn ihr an einem Eingang ein Sperrsignal zugeführt wird oder ein Signal der Signalquelle zum Übertragen ansteht und die bei Anlegen eines Sperrsignals an ihrem Eingang die Signalquelle für die Abgabe digitaler Bilddaten in vorbestimmbarer, zeitlicher Korrelation zum Bilddatentaktsignal sperrt und nach Wegfall des Sperrsignals gleichermaßen freigibt, umfaßt. Diese Signalquelle ermöglicht außer der beschriebenen Kettenschaltung der Zugriffssteuerschaltungen auch eine in anderer Weise gestaltete Ansteuerung der einzelnen Signalquellen durch eine Logikschaltung, die außerhalb der Signalquellen angeordnet ist. Dadurch wird eine noch flexiblere Betriebsweise durchführbar, insbesondere ein verschiedenen Betriebsfällen anpaßbarer Vorrang der Signalquellen. Auch können Farb- und Leuchtdichtesignale aus verschiedenen der Signalquellen entnommen werden, d.h. z.B. ein Leuchtdichtesignal aus einer, ein oder mehrere Farbsignale aus einer oder mehreren anderen Signalquellen. Die letztgenannte Betriebsweise ist auch mit einer von der Erfindung umfaßten, entsprechenden Verzweigung der Kettenschaltung erreichbar.

Die Figur zeigt blockschematisch ein Ausführungsbeispiel der erfindungsgemäßen Anordnung. Sie umfaßt vier Signalquellen 1 bis 4 und zwei Signalsenken 5, 6. Jede der Signalquellen 1, 2, 3 bzw. 4 ist mit einem Bildsignal ausgang 11, 21, 31 bzw. 41 an eine Bildsignalleitungsgruppe 7 angeschlossen, die wiederum über Bildsignaleingänge 51 bzw. 61 mit den Signalsenken 5 bzw. 6 verbunden ist. Ferner verbindet eine Synchronleitungsgruppe 8 einen Synchronsignalausgang 42 der Signalquelle 4 mit Synchronsignaleingängen 12, 22 bzw. 32 der übrigen Signalquellen 1 bis 3 sowie Synchronsignaleingängen 52 bzw. 62 der Signalsenken 5 bzw. 6.

Das vorliegende Ausführungsbeispiel weist ferner eine Zugriffssteuerung 9 auf, die zu jeder Signalquelle 1, 2, 3, 4 eine Zugriffssteuerschaltung 13, 23, 33 bzw. 43 umfaßt, die in der Figur blockschematisch als Teil der Signalquellen 1, 2, 3 bzw. 4 angedeutet sind. Jede Zugriffssteuerschaltung 13, 23, 33 bzw. 43 weist einen Eingang 14, 24, 34 bzw. 44 sowie einen Ausgang 15, 25, 35 bzw. 45 auf. Jede der Zugriffssteuerschaltungen 13, 23, 33 bzw. 43 enthält eine durch das Bilddatentaktsignal zeitlich korrelierte, logische Verknüpfung eines Sperrsignals an ihrem Eingang 14, 24, 34 bzw. 44 sowie eines ihr von der ihr zugeordneten Signalquelle zugeleiteten, internen Sperrsignals, das anzeigt, daß in der zugehörigen Signalquelle 1, 2, 3 bzw. 4 ein Signal zum Übertragen über die Bildsignalleitungsgruppe 7 ansteht, zu einem an ihrem Ausgang 15, 25, 35 bzw. 45 abgegebenen Sperrsignal. Das interne Sperrsignal ist dabei durch einen in die zugehörige Zugriffssteuerschaltung 13, 23, 33 bzw. 43 hineinweisenden Pfeil symbolisiert.

Die Sperrsignale nehmen einen hohen logischen Pegel (Wert "1") an, wenn die dieses Sperrsignal empfangende Zugriffssteuerschaltung 13, 23, 33 bzw. 43 ihre zugehörige Signalquelle 1, 2, 3 bzw. 4 für die Abgabe digitaler Bilddaten sperrt, und nimmt einen niedrigen logischen Pegel (Wert "0") an (entspricht dem Wegfall des Sperrsignals), wenn die zugehörige Signalquelle 1, 2, 3 bzw 4 freigegeben wird. Das Sperren bzw. die Freigabe geschieht über eine Wirkverbindung, beispielsweise eine Leitung, die in der Figur durch einen aus der Zugriffssteuerschaltung 13, 23, 33 bzw. 43 herausführenden, jedoch noch innerhalb der zugehörigen Signalquelle 1, 2, 3 bzw. 4 angeordneten Pfeil dargestellt ist.

Wenn von einer der Signalquellen 1, 2, 3, 4, beispielsweise der Signalquelle 1, an die zugehörige Zugriffssteuerschaltung 13 das Anstehen eines Signals zum Übertragen über die Bildsignalleitungsgruppe 7 gemeldet wird, geschieht dies in einer dem Bilddatentaktsignal zeitlich korrelierten Zuordnung zu einem in der Zukunft liegenden Zeitpunkt, zu dem diese Übertragung beginnen soll. Am Ausgang 15 der Zugriffssteuerschaltung 13 wird dann nach Ablauf einer vorgegebenen, mit dem Bilddatentaktsignal korrelierten Zeitdauer ein Sperrsignal abgegeben und dem Eingang 24 der Zugriffssteuerschaltung 23 der Signalquelle 2 zugeleitet. Das Sperrsignal am Eingang 24 bewirkt, daß die Signalquelle 2 durch die Zugriffssteuerschaltung 23 für die Abgabe digitaler Bilddaten am Bildsignalausgang 21 nach Verstreichen eines vorbestimmten, in zeitlicher Korrelation zum Bilddatentaktsignal stehenden Zeitintervalls gesperrt wird. Dieses Zeitintervall und die Zeitdauer, in der sich ein der Zugriffssteuerschaltung 13 zugeführtes Sperrsignal an deren Ausgang 15 auswirkt, entsprechen in ihrer Summe dem Zeitintervall, das zwischen dem Zuleiten des Sperrsignals an die Zugriffssteuerschaltung 13 und dem Zeitpunkt liegt, zu dem das Übertragen der Bilddaten über den Bildsignalausgang 11 auf die Bildsignalleitungsgruppe 7 beginnen soll. Das Sperren der Signalquelle 2 sowie die Freigabe der ihr gegenüber Vorrang genießenden Signalquelle 1 erfolgt damit zum selben Zeitpunkt, und zwar genau und zwangsweise festgelegt durch das Bilddatentaktsignal. Damit ist eine Umschaltung von einer auf die andere Signalquelle (von 2 nach 1) in definierter Weise zu einem genau festgelegten Zeitpunkt ohne Überlappung der Datenströme und ohne undefiniertes Zwischenintervall möglich.

Nach einer anderen, ebenfalls in zeitlicher Korrelation zum Bilddatentaktsignal stehenden Zeitdauer wird ferner am Ausgang 25 der Zugriffssteuerschaltung 23 der (nachrangigen) Signalquelle 2 ein Sperrsignal abgegeben und dieses den Eingängen 34 und 44 der Zugriffssteuerschaltungen 33 bzw 43 zugeleitet. In gleicher Weise wie in der Signalquelle 2 werden dadurch zum selben Umschaltzeitpunkt auch die Signalquellen 3, 4 für die Abgabe von Bilddaten über ihre Bildsignalausgänge 31, 41 an die Bildsignalleitungsgruppe 7 gesperrt.

Die Anordnung gemäß der Figur umfaßt ferner einen gestrichelt angedeuteten sogenannten I²C-Bus oder eine ähnliche Steuerleitungsgruppe 10 eines weiteren Steuerungssystems, über die den Signalquellen 1, 2, 3 bzw. 4 von einer nicht dargestellten, zentralen Steuerung aus statische, d.h. langsam, nicht mit dem Bilddatentaktsignal korrelierte Steuerbefehle zugeführt werden. Durch diese Steurbefehle kann die Anordnung gemäß der Figur langfristig auf den Betrieb mit einer der Signalquellen 1, 2, 3 bzw. 4 eingestellt werden, jedoch erfolgt diese Einstellung nicht korreliert mit dem Bilddatentaktsignal. Die Steuerbefehle auf der Steuerleitungsgruppe 10 bilden ein zusätzliches Auswahlkriterium für die Entscheidung, welche der Signalquellen 3 und 4 für die Übertragung von Bilddaten freigegeben werden soll, da diese Signalquellen in der Kettenschaltung der Zugriffssteuerschaltungen 13, 23, 33 bzw. 43 gleichrangig angeordnet sind. Durch die Steuerbefehle auf der Steuerleitungsgruppe 10 kann somit eine langfristige, unkorrelierte Vorauswahl der Signalquelle 3 bzw. 4 getroffen werden, während die zeitlich definierte Umschaltung über die Zugriffssteuerschaltungen 33 bzw. 43 anschließend erfolgt.

Die Signalquelle 4 des Ausführungsbeispiels umfaßt eine Taktsignalquelle 46, die über den Synchronsignalausgang 42 das Bilddatentaktsignal und das Zeilensynchronsignal an die Synchronleitungsgruppe 8 liefert. Über eine wechselseitige Wirkverbindung 47 ist die Taktsignalquelle 46 außerdem mit einer das digitale Fernsehsignal der Signalquelle 4 abgebenden Anordnung 48 verbunden. Bevorzugt ist diese Anordnung 48 eine Fernsehrundfunk-Empfangsanordnung, die ein empfangenes Fernsehsignal in am Bildsignalausgang 41 abgebbare digitale Bilddaten umsetzt und über die Wirkverbindung 47 die Phase des Bilddatentaktsignals von der Taktsignalquelle 46 synchronisiert. Dieses Bilddatentaktsignal steuert über die Synchronleitungsgruppe 8 auch alle übrigen Signalquellen 1, 2, 3 sowie die Signalsenken 5, 6. Zusätzlich wird auch das Zeilensynchronsignal aus der Taktsignalquelle 46 von der Anordnung 48 synchronisiert, so daß darüber hinaus die genannten übrigen Signalquellen und -senken des Ausführungsbeispiels mit der Signalquelle 4 und dem von ihr gelieferten, digitalen Fernsehsignal zeilenverkoppelt gesteuert werden.

In einem speziellen Ausführungsbeispiel wird die Signalquelle 1 gebildet durch eine Bildsignalbearbeitungsschaltung, die ein oder mehrere Fernsehbilder von einer oder mehreren Programmquellen ausschnittsweise oder vollständig, insbesondere in reduziertem Wiedergabemaßstab, aufbereitet und in einer Form bereitstellt, in der sie in ein Hauptbild in einer Bildwiedergabeanordnung eingeblendet werden können. Mit derartigen Anordnungen können insbesondere Zeichensymbole oder laufende Bilder eines anderen Senders in ein hauptsächlich in der Bildwiedergabeanordnung dargestelltes Fernsehbild eingeblendet werden ("Bild-im-Bild", Darstellung von Schriftzügen oder Senderkennungen). Da die einzublendenden Bilddaten in jedem Fall Vorrang vor dem hauptsächlich dargestellten Bild haben, ist die zugeordnete Signalquelle 1 in der Kettenschaltung der Zugriffssteuerschaltungen 13, 23, 33 bzw. 43 und damit der Signalquellen 1, 2, 3 bzw. 4 an den Anfang, d.h. an die Stelle mit dem höchsten Vorrang, geschaltet. Der Eingang 14 der Zugriffssteuerschaltung 13 der Signalquelle 1 ist zu diesem Zweck mit Masse verbunden, so daß die Zugriffssteuerschaltung 13 kein externes Sperrsignal erhalten kann

Als Signalquelle 2 mit nächstniedrigem Vorrang dient im speziellen Beispiel eine Schaltungsanordnung zum Einspeisen digitaler Fernsehsignale aus einer externen Programmquelle, insbesondere einem Video-Aufzeichnungs- und -Wiedergabegerät. Die Signalquellen 3 und 4 werden durch Fernsehrundfunk-Empfangsanordnungen für Fernsehsignale unterschiedlicher Normen gebildet. Dabei kann jede dieser Signalquellen 3, 4 für sich genommen wieder zum Empfang mehrerer unterschiedlicher Normen ausgebildet sein. Insbesondere dient die Signalquelle 3 zum Empfangen und Dekodieren eines Fernsehsignals nach einer der MAC-Normen, während als Signalquelle 4 ein digitaler Multistandard-Decocer insbesondere zum Umsetzen der Fernsehsignale nach der PAL- und der SECAM-Norm fungiert. Wie jedoch durch die am unteren Rand der Figur angedeuteten Pfeile in der Darstellung der Bildsignalleitungsgruppe 7, der Synchronleitungsgruppe 8 und der Steuerleitungsgruppe 10 des weiteren Steuerungssystems, insbesondere des I²C-Busses, sowie durch die Pfeile und die gestrichelten Linienfortsetzungender Ausgänge 35 bzw. 45 der Zugriffssteuerschaltungen 33 bzw. 43 zum Ausdruck gebracht wird, kann die gesamte Anordnung des vorliegenden Ausführungsbeispiels um weitere Signalquellen, aber auch um zusätzliche Signalsenken erweitert werden.

Die Signalsenken 5, 6 im vorliegenden Beispiel werden durch eine Bildwiedergabeanordnung (Signalsenke 5), vorzugsweise mit Bildspeicheranordnung und Bildsignalaufbereitung, sowie durch eine Ablenkeinheit (Signalsenke 6) gebildet. Als weitere, nicht dargestellte Signalsenken können weitere Bildwiedergabeanordnungen oder Videoaufzeichnungsgeräte oder Ähnliches dienen.

Die Bildsignalleitungsgruppe 7 im vorliegenden, speziellen Beispiel umfaßt acht parallele Datenleitungen für die digitalen Bilddaten des Leuchtdichtesignals, das in Datenworten zu je acht Bit mit einer Bilddatentaktrate von 13,5 MHz übertragen wird. Da für das Leuchtdichtesignal die größte Menge Bilddaten anfällt, wird dadurch auch die Bilddatentaktrate, d.h. die Folgefrequenz der Bilddaten zu den einzelnen Bildpunkten, festgelegt. Die parallele Übertragung aller Datenbits eines Bilddatenwortes empfiehlt sich dabei zur einfachen Übertragung mit einer möglichst niedrigen Bilddatentaktrate.

Die Bildsignalleitungsgruppe 7 umfaßt weiterhin Leitungen zur Übertragung der den Farbsignalen zugeordneten Bilddaten. Beispielsweise liegen zwei Farbsignale U und V vor, deren Bilddaten in einzelnen Datenworten zu je acht Datenbits zusammengefaßt sind. Damit weisen die Farbsignale dieselbe Auflösung in der Signalwertabstufung auf wie die Leuchtdichtesignale; bevorzugt entfällt jedoch nur ein Datenwort jedes der Farbsignale auf mehrere Datenworte des Leuchtdichtesignals, d.h. auf mehrere Bildpunkte im wiederzugebenden Bild. Die Zahl der parallelen Leitungen in der Bildsignalleitungsgruppe für die den Farbsignalen zugeordneten Bilddaten sind gegenüber der Anzahl der Leitungen für die Bilddaten des Leuchtdichtesignals im gleichen Verhältnis reduziert. Ein Datenwort eines Farbsignals wird dann im Zeitmultiplex in mehreren Schritten über diese zweite Anzahl Leitungen der Bildsignalleitungsgruppe übertragen. Je nach Anforderungen an die Bilddarstellung sind dabei unterschiedliche Datenformate denkbar, an die die Anordnung nach dem beschriebenen Ausführungsbeispiel einfach angepaßt werden kann.

Zusätzlich zu den Bilddaten wird auf der Bildsignalleitungsgruppe 7 weiterhin von jeder der Signalquellen 1, 2, 3 bzw. 4 ein Bildsynchronsignal abgegeben, welches den Bild- oder auch Halbbildwechsel - je nach der übertragenen Norm - im Bilddatenfluß kennzeichnet. Dadurch kann der Bildwechsel ohne zusätzlichen Synchronisierungsaufwand in jedem Betriebsfall der beschriebenen Anordnung einfach und sicher eingehalten werden.

Das von der Taktsignalquelle 46 abgegebene Bilddatentaktsignal auf der Synchronleitungsgruppe 8 weist eine Frequenz von 13,5 MHz entsprechend der Bilddatentaktrate auf. Vorzugsweise kann das Bilddatentaktsignal jedoch auch eine dem Vielfachen der Bilddatentaktrate entsprechende Frequenz, z B. 27 MHz, annehmen. Das weiterhin auf der Synchronleitungsgruppe 8 übertragene Zeilensynchronsignal ist in seiner Phase mit dem Bilddatentaktsignal korreliert. Beide Signale werden außer den Signalquellen 1 bis 3 auch den Signalsenken 5, 6 über die Synchronsignaleingänge 52 bzw. 62 zugeleitet.

Die Signalsenke 6 benötigt zur Erzeugung der Ablenkspannungen einer Bildwiedergabeanordnung lediglich alle Synchronsignale; aus der Bildsignalleitungsgruppe 7 wird ihr daher über den Bildsignaleingang 61 lediglich das Bildsynchronsignal zugeführt.

Weiterhin können über die Bildsignalleitungsgruppe, insbesondere die Leitung für das Bildsynchronsignal, sowie die Synchronleitungsgruppe und dort insbesondere über die Leitung für das Zeilensynchronsignal weitere Synchron- und/oder Steuersignale zeitverschachtelt zu den beschriebenen Synchronsignalen übertragen werden. Für die Leitung des Zeilensynchronsignals ist bevorzugt die Übertragung eines Datencodes vorgesehen, der die Frequenz des Bilddatentaktsignals und/oder die Bilddatentaktrate kennzeichnet; auf der Leitung für das Bildsynchronsignal werden insbesondere Kennungen über das gerade übertragene Halbbild (bei der Übertragung im Zeilensprungverfahren) weitergeleitet. Darüber hinaus können sowohl die Bildsignalleitungsgruppe 7 als auch die Synchronleitungsgruppe 8 weitere Leitungen zum Übertragen zusätzlicher Steuersignale oder dergleichen umfassen.

Während die Leitungen der Synchronleitungsgruppe 8 eine kontinuierliche Wirkverbindung zu allen angeschlossenen Baugruppen, d.h Signalquellen und -senken, aufweisen, sind die Signalquellen mit ihren Bildsignalausgängen 11, 21, 31 bzw. 41 mittels sogenannter "Tri-State-Anschlüsse" mit der Bildsignalleitungsgruppe 7 verknüpft. Diese Tri-State-Anschlüsse werden durch die Sperrsignale in einen hochohmigen Zustand geschaltet, wenn die betreffende Signalquelle für die Abgabe von Bilddaten gesperrt wird.

## Patentansprüche

1. Anordnung zum Übertragen digitaler Bildsignale aus einer Anzahl von Signalquellen (1,2,3,4) auf wenigstens eine Signalsenke (5,6),
gekennzeichnet durch
- eine Bildsignalleitungsgruppe (7) zum Übertragen von als digitale Bilddaten kodierten Signalen von jeweils einer oder mehreren wählbaren der Signalquellen (1,2,3,4),
- eine Synchronleitungsgruppe (8) zum Übertragen eines Bilddatentaktsignals und eines Zeilensynchronsignals von einer Taktsignalquelle (46)
- sowie eine Zugriffssteuerung (9) mit zu jeder Signalquelle (1,2,3,4) einer Zugriffssteuerschaltung (13,23,33,43),
- die an einem ihrer Ausgänge (15,25,35,45) ein Sperrsignal abgibt, wenn ihr an einem Eingang (14,24,34,44) ein Sperrsignal zugeführt wird oder ein Signal der zugehörigen Signalquelle (1,2,3,4) zum Übertragen ansteht, und
- die bei Anlegen eines Sperrsignals an ihrem Eingang (14,24,34,44) die zugehörige Signalquelle (1,2,3,4) für die Abgabe digitaler Bilddaten in vorbestimmbarer, zeitlicher Korrelation zum Bilddatentaktsignal sperrt und nach Wegfall des Sperrsignals gleichermaßen freigibt,
wobei alle Zugriffssteuerschaltungen (13,23,33,34) bezüglich ihrer Ein- (14,24,34,44) und Ausgänge (15,25,35,45) in einer den Vorrang der Signalquellen (1,2,3,4) für die Übertragung bestimmenden Kettenschaltung angeordnet sind.

2. Anordnung nach Anspruch 1,
dadurch gekennzeichnet, daß über die Bildsignalleitungsgruppe (7) weitere Synchron- und/oder Steuersignale, insbesondere ein Bildsynchronsignal, übertragbar sind.

3. Anordnung nach Anspruch 1 oder 2,
dadurch gekennzeichnet, daß zum Übertragen des Zeilen-und/oder des Bildsynchronsignais eingerichtete Leitungen zum zusätzlichen, zeitverschachtelten Übertragen weiterer Signale einsetzbar sind.

4. Anordnung nach Anspruch 1, 2 oder 3,
dadurch gekennzeichnet, daß die Taktsignalquelle (46) von einer bestimmten der Signalquellen (1,2,3,4) umfaßt ist.

5. Anordnung nach Anspruch 2, 3 oder 4,
dadurch gekennzeichnet, daß das Bildsynchronsignal von einer der Signalquellen (1,2,3,4) aus dem von ihr gelieferten Bildsignal ableitbar ist.

6. Anordnung nach einem der vorhergehenden Ansprüche,
dadurch gekennzeichnet, daß die einem Leuchtdichtesignal zugeordneten Bilddaten parallel über eine erste Anzahl Leitungen und die einem oder mehreren Farbsignalen zugeordneten Bilddaten parallel oder im Zeitmultiplex über eine zweite Anzahl Leitungen der Bildsignalleitungsgruppe (7) übertragbar sind.

7. Signalquelle (1,2 bzw. 3) zum Abgeben digitaler Bildsignale,
gekennzeichnet durch
- einen Bildsignalausgang (11,21 bzw. 31) zum Abgeben von als digitale Bilddaten kodierten Signalen,
- einen Synchronsignaleingang (12,22 bzw. 32) zum Empfangen eines Bilddatentaktsignals und eines Zeilensynchronsignals
- sowie eine Zugriffssteuerschaltung (13,23 bzw. 33), die an einem Ausgang (15,25 bzw. 35) ein Sperrsignal abgibt, wenn ihr an einem Eingang (14,24 bzw. 34) ein Sperrsignal zugeführt wird oder ein Signal der Signalquelle (1,2 bzw. 3) zum Übertragen ansteht und die bei Anlegen eines Sperrsignals an ihrem Eingang (14,24 bzw. 34) die Signalquelle (1,2 bzw. 3) für die Abgabe digitaler Bilddaten in vorbestimmbarer, zeitlicher Korrelation zum Bilddatentaktsignal sperrt und nach Wegfall des Sperrsignals gleichermaßen freigibt.

8. Signalquelle (4) zum Abgeben digitaler Bildsignale,
gekennzeichnet durch
- einen Bildsignalausgang (41) zum Abgeben von als digitale Bilddaten kodierten Signalen,
- einen Synchronsignalausgang (42) zum Abgeben eines Bilddatentaktsignals und eines Zeilensynchronsignals
- sowie eine Zugriffssteuerschaltung (43), die an einem Ausgang (45) ein Sperrsignal abgibt, wenn ihr an einem Eingang (44) ein Sperrsignal zugeführt wird oder ein Signal der Signalquelle (4) zum Übertragen ansteht und die bei Anlegen eines Sperrsignals an ihrem Eingang (44) die Signalquelle (4) für die Abgabe digitaler Bilddaten in vorbestimmbarer, zeitlicher Korrelation zum Bilddatentaktsignal sperrt und nach Wegfall des Sperrsignals gleichermaßen freigibt.

## Claims

1. An arrangement for transmitting digital picture signals from a plurality of signal sources (1, 2, 3, 4) to at least one signal sink (5, 6), characterized by
- a picture signal line group (7) for transmitting signals encoded as digital picture data from always one optional signal source from the signal sources (1, 2, 3, 4),
- a synchronizing signal line group (8) for transmitting a picture data clock signal and a line synchronizing signal from a clock signal source (46)
- and also an access-control (9) having for each signal source (1, 2, 3, 4) an access-control circuit (13, 23, 33, 43),
- which supplies an inhibit signal from one of its outputs (15, 25, 35, 45) when an inhibit signal is applied to its input (14, 24, 34, 44) or when a signal from the associated signal source (1, 2, 3, 4) is available for transmission and
- which, when an inhibit signal is present at its input (14, 24, 34, 44), inhibits the associated signal source (1, 2, 3, 4) for the supply of digital picture data in a predeterminable temporal correlation with the picture data clock signal and enables it in like manner after the inhibit signal has disappeared,
all access-control circuits (13, 23, 33, 43) having their inputs (14, 24, 34, 44) and their outputs (15, 25, 35, 45) incorporated in a chain circuit which determines the priority of the signal sources (1, 2, 3, 4) for the transmission.

2. An arrangement as claimed in Claim 1, characterized in that further synchronizing and/or control signals, a picture synchronizing signal in particular, are transmittable via the picture signal line group (7).

3. An arrangement as claimed in Claim 1 or 2, characterized in that lines which are arranged for transmitting the line and/or the picture synchronizing signal can additionally be used for the time-interleaved transmission of further signals.

4. An arrangement as claimed in Claim 1, 2 or 3, characterized in that the clock signal source (46) is comprised in one given source of the signal sources (1, 2, 3, 4).

5. An arrangement as claimed in Claim 2, 3 or 4, characterized in that the picture synchronizing signal from one of the signal sources (1, 2, 3, 4) can be derived from the television signal supplied thereby.

6. An arrangement as claimed in any one of the preceding Claims, characterized in that the picture data assigned to the luminance signal can be transmitted in parallel via a first number of lines and the picture data assigned to one or a plurality of color signals can be transmitted in parallel or in time-division multiplex via a second number of lines of the picture signal line group (7).

7. A signal source (1, 2, 3) for supplying digital picture signals, characterized by
- a picture signal output (11, 21, 31) for supplying signals encoded as digital picture data,
- a synchronizing signal input (12, 22, 32) for receiving a picture data clock signal and a line synchronizing signal,
- and an access control circuit (13, 23, 33), an output (15, 25, 35) of which supplies an inhibit signal when an inhibit signal is applied to its input (14, 24, 34) or when a signal from the signal source (1, 2, 3) is available for transmission and which, when an inhibit signal is present at its input (14, 24, 34), inhibits the signal source (1, 2, 3) for the supply of digital picture data in a predeterminable, temporal correlation with the picture data clock signal and enables it in like manner after the inhibit signal has disappeared.

8. A signal source (4) for supplying digital picture signals, characterized by
- a picture signal output (41) for supplying signals encoded as digital picture data,
- a synchronizing signal output (42) for supplying a picture data clock signal and a line synchronizing signal,
- and an access control circuit (43), an output (45) of which supplies an inhibit signal when an inhibit signal is applied to its input (44) or when a signal from the signal source (4) is available for transmission and which, when an inhibit signal is present at its input (44), inhibits the signal source (4) for the supply of digital picture data in a predeterminable, temporal correlation with the picture data clock signal and enables it in like manner after the inhibit signal has disappeared.

## Revendications

1. Montage pour la transmission de signaux d'image numériques à partir d'un certain nombre de sources de signaux (1, 2, 3, 4) vers au moins un récepteur de signaux (5, 6), caractérisé par
- un groupe de lignes de signaux d'image (7) pour transmettre des signaux codés en tant que données d'image numériques de, respectivement, une ou plusieurs des sources de signaux (1, 2, 3, 4) sélectionnables,
- un groupe de lignes de synchronisation (8) pour transmettre un signal de cadencement de données d'image et un signal de synchronisation de lignes d'une source de signaux de cadencement (46),
- ainsi qu'une commande d'accès (9) avec, pour chaque source de signaux (1, 2, 3, 4) un circuit de commande d'accès (13, 23, 33, 43),
- qui délivre à une de ses sorties (15, 25, 35, 45) un signal de blocage lorsqu'un signal de blocage est acheminé, à une entrée (14, 24, 34, 44) ou qu'un signal de la source de signaux concernée (1, 2, 3, 4) est en attente de transmission, et
- qui, lors de l'application d'un signal de blocage à son entrée (14, 24, 34, 44) bloque la source de signaux concernée (1, 2, 3, 4) pour la délivrance de données d'image numériques selon une corrélation prédéterminable dans le temps avec le signal de cadencement de données d'image et la libère normalement après élimination du signal de blocage,
toutes les entrées (14, 24, 34, 44) et les sorties (15, 25, 35, 45) des circuits de commande d'accès (13, 23, 33, 34) étant agencées dans un circuit en chaîne déterminant la priorité des sources de signaux (1, 2, 3, 4) pour la transmission.

2. Montage selon la revendication 1, caractérisé en ce que d'autres signaux de synchronisation et/ou de commande, en particulier un signal de synchronisation d'image, peuvent être transmis via le groupe de lignes de signaux d'image (7).

3. Montage selon la revendication 1 ou 2, caractérisé en ce que, des lignes conçues pour transmettre le signal de synchronisation de lignes et/ou le signal de synchronisation d'image, peuvent être utilisées pour la transmission supplémentaire, imbriquée dans le temps, d'autres signaux.

4. Montage selon la revendication 1, 2 ou 3, caractérisé en ce que la source de signaux de cadence (46) est comprise dans une des sources de signaux (1, 2, 3, 4) déterminée.

5. Montage selon la revendication 2, 3 ou 4, caractérisé en ce que le signal de synchronisation d'image peut être tiré de l'une des sources de signaux (1, 2, 3, 4) à partir du signal d'image délivré par celle-ci.

6. Montage selon l'une quelconque des revendications précédentes, caractérisé en ce que les données d'image affectées à un signal de luminance peuvent être transmises en parallèle via un premier nombre de lignes et les données d'image affectées à un ou plusieurs signaux de couleur peuvent être transmises en parallèle ou en multiplexage dans le temps via un deuxième nombre de lignes du groupe de lignes de signaux d'image (7).

7. Source de signaux (1, 2 ou 3) pour délivrer des signaux d'image numériques, caractérisé par :
- une sortie de signaux d'image (11, 21 ou 31) pour délivrer des signaux codés sous la forme de données d'image numériques,
- une entrée de signaux de synchronisation (12, 22 ou 32) pour recevoir un signal de cadencement de données d'image et un signal de synchronisation de lignes,
- ainsi qu'un circuit de commande d'accès (13, 23 ou 33), qui délivre à une sortie (15, 25 ou 35) un signal de blocage, lorsqu'à une entrée (14, 24 ou 34) lui parvient un signal de blocage ou qu'un signal de la source de signaux (1, 2 ou 3) est en attente de transmission et qui, lors de l'application d'un signal de blocage à son entrée (14, 24 ou 34), bloque la source de signaux (1, 2 ou 3) pour la délivrance de données d'image numériques selon une corrélation dans le temps prédéterminable avec le signal de cadencement de données d'image et la libère normalement après élimination du signal de blocage.

8. Source de signaux (4) pour délivrer des signaux d'image numériques, caractérisé par :
- une sortie de signaux d'image (41) pour délivrer des signaux codés sous forme de données d'image numériques,
- une sortie de signaux de synchronisation (42) pour délivrer un signal de cadencement de données d'image et un signal de synchronisation de lignes,
- ainsi qu'un circuit de commande d'accès (43), qui délivre à une sortie (45) un signal de blocage lorsqu'un signal de blocage lui parvient à une entrée (44) ou qu'un signal de la source de signaux (4) est en attente de transmission et qui, lors de l'application d'un signal de blocage à son entrée (44), bloque la source de signaux (4) pour la délivrance de données d'image numériques selon une corrélation dans le temps prédéterminable avec le signal de cadencement de données d'image et la libère normalement après élimination du signal de blocage.
